# EUROPEAN PATENT APPLICATION

(11) **EP 4 686 029 A1**
(43) Date of publication of application: **28.01.2026**
(21) Application number: 24209499.3
(22) Date of filing: 29.10.2024
(51) Int. Cl.: H02J 1/10, H02J 3/38

(54) **POWER CONVERTER, PHOTOVOLTAIC SYSTEM, CONTROL METHOD, CONTROL APPARATUS, AND MEDIUM**

(30) Priority: 23.07.2024 CN 202410994737
(71) Applicant: Sungrow Power Supply Co., Ltd., Hefei, Anhui 230088 (CN)
(72) Inventor: CAO, Jinhu, Hefei (CN); PENG, Lianglin, Hefei (CN); HU, Fanyu, Hefei (CN); CHENG, Wei, Hefei (CN); FENG, Jigui, Hefei (CN)
(74) Representative: Zacco Norway AS

(57) **Abstract**

A power converter, a photovoltaic system, a control method, a control apparatus, and a medium are provided. The power converter includes: a controller and at least two power conversion circuits. The at least two power conversion circuits include a first power conversion circuit and a second power conversion circuit. A first terminal of the first power conversion circuit is connected to a first photovoltaic module, and a first terminal of the second power conversion circuit is connected to a second photovoltaic module. The controller is configured to, if a difference between an electrical parameter of the first power conversion circuit and an electrical parameter of the second power conversion circuit exceeds a predetermined range, perform a current-voltage IV curve scanning on one power conversion circuit having a lower power, a lower current or a higher voltage among the first power conversion circuit and the second power conversion circuit to obtain a new maximum power point in a scanning result, and control the power conversion circuit on which the current-voltage IV curve scanning is performed to operate at the new maximum power point. The electrical parameter includes at least one of a power, a voltage and a current. With the solutions in the present disclosure, it can be ensured that a photovoltaic module operates at a global maximum power point even when being shaded, without losing power generation.

## Description

### FIELD

The present disclosure relates to the technical field of photovoltaic power generation, and in particular to a power converter, a photovoltaic system, a control method, a control apparatus, and a medium.

### BACKGROUND

When a photovoltaic module is shaded, it may cause a decrease in a short-circuit current, that is, a change in a current-voltage IV curve, and then a new maximum power point may appear for a photovoltaic string. If the photovoltaic module operates at the new maximum power point that appears while the photovoltaic module is shaded, it may result in a loss of power generation.

### SUMMARY

In view of this, a power converter, a photovoltaic system, a control method, a control apparatus, and a medium are provided according to the present disclosure, ensuring a photovoltaic module to operate at a global maximum power point even when being shaded, without losing power generation.

According to the present disclosure, a power converter is provided. The power converter includes: a controller and at least two power conversion circuits. The at least two power conversion circuits include a first power conversion circuit and a second power conversion circuit. A first terminal of the first power conversion circuit is connected to a first photovoltaic module, and a first terminal of the second power conversion circuit is connected to a second photovoltaic module. The controller is configured to, if a difference between an electrical parameter of the first power conversion circuit and an electrical parameter of the second power conversion circuit exceeds a predetermined range, perform a current-voltage IV curve scanning on the first power conversion circuit or the second power conversion circuit whichever has a lower power, a lower current or a higher voltage to obtain a new maximum power point in a scanning result, and control the power conversion circuit on which the current-voltage IV curve scanning is performed to operate at the new maximum power point. The electrical parameter includes at least one of a power, a voltage and a current.

In an embodiment, the controller is further configured to: perform the IV curve scanning on one of the first power conversion circuit and the second power conversion circuit if the difference between the electrical parameter of the first power conversion circuit and the electrical parameter of the second power conversion circuit is within the predetermined range in a predetermined time period; perform the IV curve scanning on the other one of the first power conversion circuit and the second power conversion circuit if the difference between the electrical parameter corresponding to the maximum power point before the IV curve scanning and the electrical parameter corresponding to the maximum power point after the IV curve scanning is greater than the predetermined threshold; and control each of the first power conversion circuit and the second power conversion circuit to operate at their respective maximum power point after the IV curve scanning.

In an embodiment, the power converter further includes: a third power conversion circuit. The electrical parameter is the power. The controller is configured to: obtain a maximum power of the first power conversion circuit, the second power conversion circuit, and the third power conversion circuit; compare powers of two power conversion circuits other than the power conversion circuit having the maximum power with the maximum power; perform, if differences between the powers of the two power conversion circuits and the maximum power exceed the predetermined range, the IV curve scanning on each of the two power conversion circuits to obtain a maximum power point in scanning results; and control each of the two power conversion circuits to operate at their respective maximum power point.

In an embodiment, the controller is configured to perform, if a difference between an electrical parameter of one of the two power conversion circuits and the maximum power exceeds the predetermined range, the IV curve scanning on the power conversion circuit having the difference exceeding the predetermined range to obtain a maximum power point in a scanning result, and control the power conversion circuit to operate at the maximum power point after the IV curve scanning.

In an embodiment, in a case that the number of the first photovoltaic module is same as the number of the second photovoltaic module, the difference between the electrical parameter of the first power conversion circuit and the electrical parameter of the second power conversion circuit is directly compared with the predetermined range; and in a case that the number of the first photovoltaic module is different from the number of the second photovoltaic module, the difference between the electrical parameter of the first power conversion circuit and the electrical parameter of the second power conversion circuit is obtained, and a product of the difference and a predetermined ratio is compared with the predetermined range. The predetermined ratio is obtained based on the number of the first photovoltaic module and the number of the second photovoltaic module.

In an embodiment, the first power conversion circuit includes a direct-current/direct-current conversion circuit, and the second power conversion circuit includes a direct-current/direct-current conversion circuit.

In an embodiment, the power converter is arranged in an inverter, a combiner box, or an optimizer.

According to the present disclosure, a photovoltaic system is further provided. The photovoltaic system includes the power converter and an inverter circuit. A second terminal of the first power conversion circuit and a second terminal of the second power conversion circuit are both connected to a direct-current side of the inverter circuit.

According to the present disclosure, a control method for a power converter is further provided. The control method includes:
detecting electrical parameters of n power conversion circuits, and obtaining a most value among the n electrical parameters; where n is an integer greater than or equal to 2, the electrical parameters includes powers, voltages, or currents, the most value is a maximum value in a case that the electrical parameters are powers or currents, and the most value is a minimum value in a case that the electrical parameters are voltages; and
performing, if a difference between an electrical parameter of an i-th power conversion circuit and the most value exceeds a predetermined range, a current-voltage IV curve scanning on the i-th power conversion circuit to obtain a new maximum power point in a scanning result, and controlling the i-th power conversion circuit to operate at the new maximum power point; where the i-th power conversion circuit is any one of the n power conversion circuits.

In an embodiment, the method further includes:
performing, if differences between the electrical parameters of the n power conversion circuits and the most value are within the predetermined range in a predetermined time period, the IV curve scanning on any one of the n power conversion circuits;
performing, if a difference between the electrical parameter corresponding to the maximum power point before the IV curve scanning and the electrical parameter corresponding to the maximum power point after the IV curve scanning is greater than the predetermined threshold, the IV curve scanning on the other power conversion circuits; and
controlling each of the power conversion circuits to operate at their respective maximum power point after the IV curve scanning.

In an embodiment, it is determined whether the difference between the electrical parameter of the i-th power conversion circuit and the most value exceeds the predetermined range by:
directly comparing a difference between the electrical parameter of the i-th power conversion circuit and an electrical parameter of a power conversion circuit having the most value with the predetermined range in a case that the number of photovoltaic modules connected to the i-th power conversion circuit is the same as the number of photovoltaic modules connected to the power conversion circuit having the most value; and
obtaining a difference between the electrical parameter of the i-th power conversion circuit and an electrical parameter of a power conversion circuit having the most value, and comparing a product of the difference and a predetermined ratio with the predetermined range, in a case that the number of photovoltaic modules connected to the i-th power conversion circuit is different from the number of photovoltaic modules connected to the power conversion circuit having the most value; where the predetermined ratio is obtained based on the number of the photovoltaic modules connected to the i-th power conversion circuit and the number of the photovoltaic modules connected to the power conversion circuit having the most value.

In an embodiment, it is determined whether the difference between the electrical parameter of the i-th power conversion circuit and the most value exceeds the predetermined range by:
obtaining a first electrical parameter that is equal to a product of the electrical parameter of the i-th power conversion circuit and a predetermined ratio, obtaining a difference between the first electrical parameter and the electrical parameter of the power conversion circuit having the most value, and comparing the difference with the predetermined range, in a case that the number of photovoltaic modules connected to the i-th power conversion circuit is different from the number of photovoltaic modules connected to the power conversion circuit having the most value; where the predetermined ratio is obtained based on the number of the photovoltaic modules connected to the i-th power conversion circuit and the number of the photovoltaic modules connected to the power conversion circuit having the most value.

According to the present disclosure, a control apparatus is further provided. The control apparatus includes: a processor and a memory. The memory stores a program, instructions or codes. The processor is configured, when executing the program, the instructions or the codes stored in the memory, to perform the control method for a power converter mentioned above.

According to the present disclosure, a computer-readable storage medium is further provided. The computer-readable storage medium stores a computer program. The computer program, when executed by a processor, causes the processor to perform the control method for a power converter mentioned above.

With the photovoltaic system according to the embodiments of the present disclosure, the input terminal of the inverter is connected multiple direct-current converters, the input powers of all the direct-current converters are obtained, and a maximum input power is determined from n input powers as a maximum power. Except for the direct-current converter having the maximum power, the input powers of the other n-1 direct-current converters are compared with the maximum power to determine a direct-current converter with a power difference between the input power and the maximum power exceeds the predetermined range. It should be understood that one direct-current converter may be determined, or multiple direct-current converters may be determined. For each of the direct-current converters with a power difference between the input power and the maximum power exceeding the predetermined range, an IV curve scanning is performed on the direct-current converter to obtain a new maximum power point for the direct-current converter. Therefore, the global maximum power point of the shaded photovoltaic module is determined, thereby solving the problem of power loss caused by multiple peak values of power points due to the photovoltaic module being shaded.

### BRIEF DESCRIPTION OF THE DRAWINGS

FIG. 1 is a schematic diagram of a photovoltaic system according to an embodiment of the present disclosure;
FIG. 2 shows an IV curve of a photovoltaic module not being shaded according to an embodiment of the present disclosure;
FIG. 3 shows an IV curve of a photovoltaic module being shaded according to an embodiment of the present disclosure;
FIG. 4 shows a PV curve of a photovoltaic module that is shaded according to an embodiment of the present disclosure;
FIG. 5 is a schematic diagram of a power converter according to an embodiment of the present disclosure;
FIG. 6 is a schematic diagram of a power converter according to another embodiment of the present disclosure;
FIG. 7 is a schematic diagram of a power converter according to another embodiment of the present disclosure;
FIG. 8 is a schematic diagram of a power converter according to another embodiment of the present disclosure;
FIG. 9 is a schematic diagram of a photovoltaic system according to another embodiment of the present disclosure;
FIG. 10 is a flowchart of a control method for a power converter according to an embodiment of the present disclosure; and
FIG. 11 is a schematic diagram of a control apparatus according to an embodiment of the present disclosure.

### DETAILED DESCRIPTION

In order to enable those skilled in the art to better understand and implement the technical solutions according to the embodiments of the present disclosure, a photovoltaic system with multiple direct-current inputs is firstly described below in conjunction with the drawings.

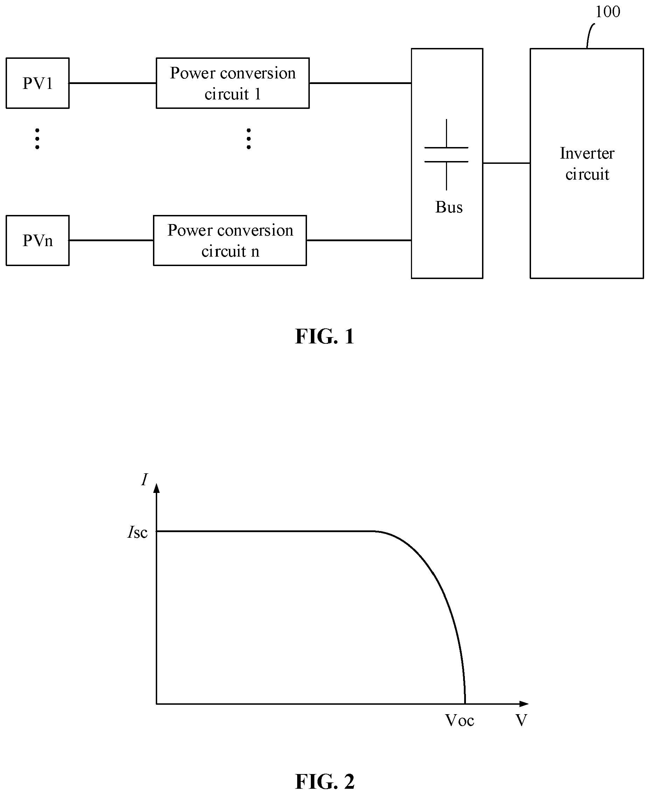

Reference is made to FIG. 1, which is a schematic diagram of a photovoltaic system according to an embodiment of the present disclosure.

The photovoltaic system according to the embodiment of the present disclosure includes an inverter circuit 100 and multiple power conversion circuits, such as a power conversion circuit 1 to a power conversion circuit n. A first terminal of each of the power conversion circuits is connected to a corresponding photovoltaic module. For example, the power conversion circuit 1 is connected to PV1, and the power conversion circuit n is connected to PVn.

A second terminal of each of the power conversion circuits is connected to a direct-current bus, and a direct-current side of the inverter 100 is also connected to the direct-current bus, which is equivalent to the second terminals of the power conversion circuits being connected to the direct-current side of the inverter 100.

Hereinafter, features curves of a photovoltaic module being shaded and not being shaded are described in conjunction with the accompanying drawings.

Reference is made to FIG. 2, which shows an IV curve of a photovoltaic module not being shaded according to an embodiment of the present disclosure.

For the IV curve of the photovoltaic module, the horizontal axis represents voltages V and the vertical axis represents currents I. Voc represents an open-circuit voltage of the photovoltaic module, and Isc represents a short-circuit current of the photovoltaic module.

It can be seen from FIG. 2 that when the photovoltaic string operates normally and is not shaded, the IV curve only includes one inflection point, which is also known as a knee point.

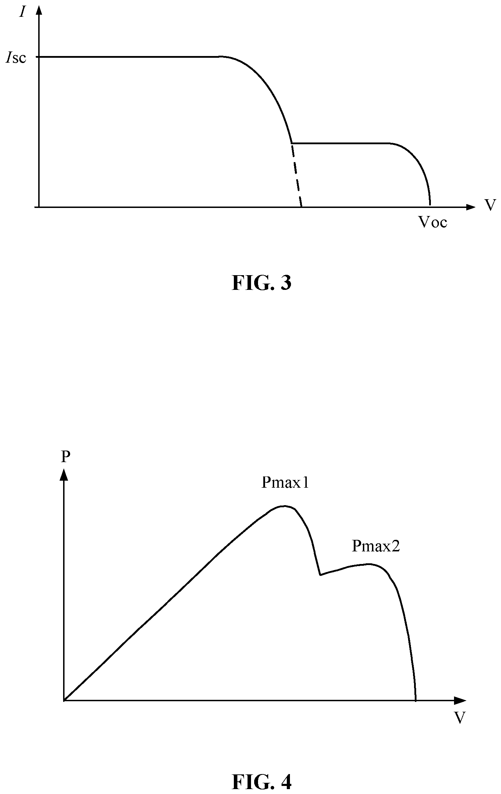

Reference is made to FIG. 3, which shows an IV curve of a photovoltaic module being shaded according to an embodiment of the present disclosure.

From the IV curve of the photovoltaic module being shaded shown in FIG. 3, it can be seen that two inflection points exist, that is, two knee points exist.

Reference is made to FIG. 4, which shows a PV curve of a photovoltaic module being shaded according to an embodiment of the present disclosure.

In FIG. 4, the horizontal axis represents voltages V, and the vertical axis represents powers P. From FIG. 4, it can be seen that two power inflection points exist for the shaded photovoltaic module, two local maximum power points Pmax1 and Pmax2 exist, and a global maximum power point Pmax1 exists. When the photovoltaic module is shaded, the photovoltaic module may operate at Pmax2 if no IV global scanning is performed, the photovoltaic module cannot output the maximum power, resulting in loss of power generation.

With the power converter according to the embodiments of the present disclosure, to avoid loss of power generation when the photovoltaic module is shaded, a global IV scanning is performed if the power of the photovoltaic module is low, so that the photovoltaic module operates at a maximum power point after the global IV scanning, avoiding the photovoltaic module from operating at a local maximum power point for a long time period.

In order to make the above objectives, features and advantages of the present disclosure more apparent and easier to be understood, the embodiments of the present disclosure are described in detail below in conjunction with the drawings and the embodiments.

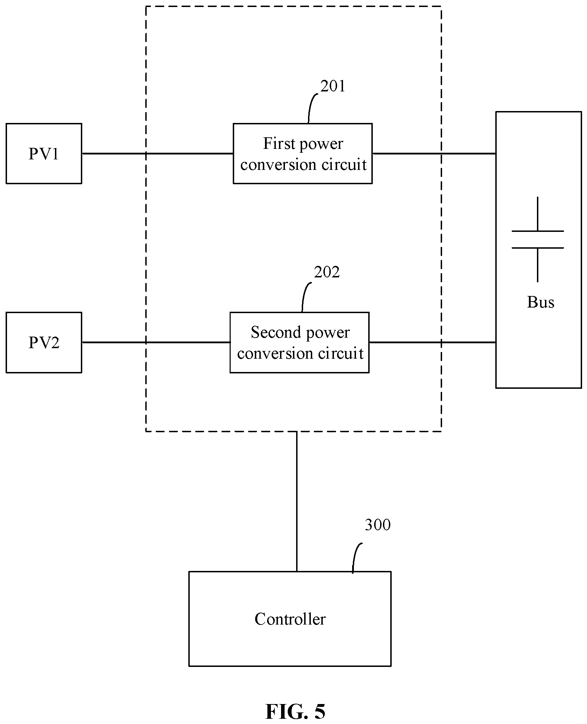

Reference is made to FIG. 5, which is a schematic diagram of a power converter according to an embodiment of the present disclosure.

The power converter according to the embodiment of the present disclosure includes: a controller 300 and at least two power conversion circuits. The at least two power conversion circuits may include: a first power conversion circuit 201 and a second power conversion circuit 202. A first terminal of the first power conversion circuit 201 is connected to a first photovoltaic module PV1, and a first terminal of the second power conversion circuit 202 is connected to a second photovoltaic module PV2.

In the embodiments of the present disclosure, the number of the power conversion circuits is not limited. For the convenience of description, only two power conversion circuits are shown in FIG. 5 as an example. It should be understood that more power conversion circuits may be included.

The controller 300 is configured to, if a difference between an electrical parameter of the first power conversion circuit and an electrical parameter of the second power conversion circuit exceeds a predetermined range, perform an IV curve scanning on one power conversion circuit having a lower power, a lower current or a higher voltage among the first power conversion circuit 201 and the second power conversion circuit 202 to obtain a new maximum power point in a scanning result, and control the power conversion circuit on which the current-voltage IV curve scanning is performed to operate at the new maximum power point. The electrical parameter includes at least one of a power, a voltage and a current.

For example, descriptions are provided by taking the electrical parameter as an input power as an example. The controller 300 is configured to, if a power difference between an input power of the first power conversion circuit 201 and an input power of the second power conversion circuit 202 exceeds a predetermined range, perform an IV curve scanning on the power conversion circuit 201 having a lower power among the first power conversion circuit 201 and the second power conversion circuit 202 to obtain a new maximum power point in a scanning result, and then control the power conversion circuit 201 having the lower power to operate at the new maximum power point.

It should be understood that the IV curve scanning is performed by changing the inputted voltage and the input current of the power conversion circuit along the IV curve shown in FIG. 2. That is, the voltages and the currents of the power conversion circuit are measured at all the operation points to obtain corresponding powers, and then a maximum power point in the entire operation range is obtained. When the photovoltaic module is shaded, such as multiple maximum power points existing in FIG. 4, the maximum power point is determined as the new maximum power point in the scanning result.

In a case that the number of the first photovoltaic module is same as the number of the second photovoltaic module, the difference between the electrical parameter of the first power conversion circuit and the electrical parameter of the second power conversion circuit is directly compared with the predetermined range. In a case that the number of the first photovoltaic module is different from the number of the second photovoltaic module, the difference between the electrical parameter of the first power conversion circuit and the electrical parameter of the second power conversion circuit is obtained, and a product of the difference and a predetermined ratio is compared with the predetermined range. The predetermined ratio is obtained based on the number of the first photovoltaic module and the number of the second photovoltaic module.

For example, descriptions are provided still by taking the electrical parameter as an input power as an example. In a case that the number of the first photovoltaic module is same as the number of the second photovoltaic module, a power difference between an input power of the first power conversion circuit and an input power of the second power conversion circuit is directly compared with a predetermined range. In a case that the number of the first photovoltaic module is different from the number of the second photovoltaic module, a power difference between an input power of the first power conversion circuit and an input power of the second power conversion circuit is obtained, and a product of the power difference and a predetermined ratio is compared with the predetermined range. The predetermined ratio is obtained based on the number of the first photovoltaic module and the number of the second photovoltaic module.

In the embodiments of the present disclosure, the predetermined range is not limited and may be configured based on the power level of the photovoltaic system. In a case that the configurations of the photovoltaic modules connected to the input terminals of all the power conversion circuits in the photovoltaic system are similar, for example, the numbers of the photovoltaic modules are similar and the parameters of the photovoltaic modules are similar, when the photovoltaic modules are not shaded, the input powers of the power conversion circuits are similar, and the predetermined range may be configured as a value or a range. In a case that the numbers of photovoltaic modules connected to the power conversion circuits in the photovoltaic system are different, the initial powers are different, and then the power difference may be multiplied by a predetermined ratio and then is compared with the predetermined range.

For example, in a case that the number of PV1 and the number of PV2 are similar and each of the PV1 and PV2 includes N photovoltaic modules connected in series, the difference between the power of PV1 and the power of PV2 may be directly compared with the predetermined range.

For example, the photovoltaic system may include n power conversion circuits, where n is an integer greater than or equal to 2. The power conversion circuits are numbered as MPPT1, MPPT2, •••, and MPPTn, and the input powers of the power conversion circuits are represented by P1, P2, ..., and Pn. The predetermined range is set to be a power threshold ΔP (ΔP>0). In actual operation, a maximum power Pi (i=1, 2, ..., n) among the input powers of the multiple power conversion circuits is determined. For example, in a case that an input power of a 5th power conversion circuit is the highest power among the n input powers, then Pi is P5. If an input power Pj (j=1, 2,..., n) of one or multiple power conversion circuits is lower than the maximum power Pi and a difference between the input power Pj and the maximum power Pi is greater than the predetermined range ΔP, that is, Pi-Pj>ΔP, an IV curve scanning is performed on the direct-current converter corresponding to the lower input power Pj.

In the case that the number of PV1 and the number of PV2 are different, the power difference between the power of PV1 and the power of PV2 may be converted with a ratio, for example, the powers may be multiplied by the ratio and then a difference is calculated; or a difference between the powers may be calculated, then is multiplied by the ratio, and then is compared with a predetermined range. For example, different power conversion circuits may be connected to photovoltaic modules that have different configuration powers or different degrees of aging in long-term operation or different light receiving angles. That is, different power conversion circuits may have different reference powers. For each of the power conversion circuits, a reference power may be obtained by manually configuring the power of the power conversion circuit, or by obtaining the power of the power conversion circuit not being shaded (such as operation data at noon without any shading), or by recording a power in a last global scanning. A maximum power Pi (i=1, 2,..., n) among powers of the multiple power conversion circuits operating with the reference powers is recorded. If an operation power Pj (j=1, 2,..., n) of one or several power conversion circuits is lower than the maximum power Pi and the difference between the operation power Pj and the maximum power Pi exceeds the predetermined range ΔP, that is, Pi-Pj>ΔP, a global scanning is performed on the power conversion circuit corresponding to the lower power Pj.

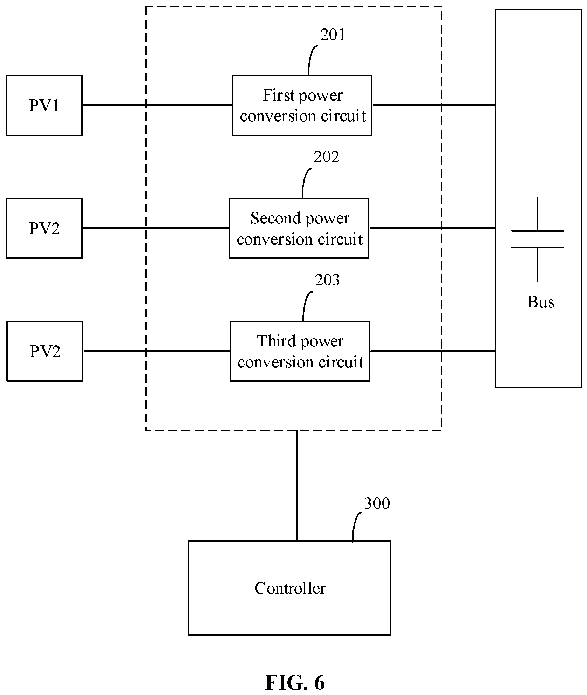

For better understanding, following descriptions are provided by taking a power converter including three power conversion circuits as an example. Reference is made to FIG. 6, which is a schematic diagram of a power converter according to another embodiment of the present disclosure.

For example, the difference between the power converter in this embodiment and the power converter in FIG. 5 is that the power converter in this embodiment further includes a third power conversion circuit 203. The controller 300 is configured to: obtain a maximum power of the first power conversion circuit 201, the second power conversion circuit 202, and the third power conversion circuit 203; compare input powers of two power conversion circuits other than the power conversion circuit having the maximum power with the maximum power; perform, if differences between the input powers of the two power conversion circuits and the maximum power exceed the predetermined range, the IV curve scanning on each of the two power conversion circuits to obtain a maximum power point in scanning results; and control each of the two power conversion circuits to operate at their respective maximum power point.

In another embodiment, the controller is configured to perform, if a difference between an electrical parameter of one of the two power conversion circuits and the maximum power exceeds the predetermined range, the IV curve scanning on the power conversion circuit having the difference exceeding the predetermined range to obtain a maximum power point in a scanning result, and control the power conversion circuit to operate at the maximum power point after the IV curve scanning.

In a case that a difference between the input power of only one power conversion circuit and the maximum power exceeds the predetermined range, the IV curve scanning is performed only on the power conversion circuit having the difference exceeding the predetermined range, and it is unnecessary to perform the IV curve scanning on the power conversion circuit having a difference not exceeding the predetermined range.

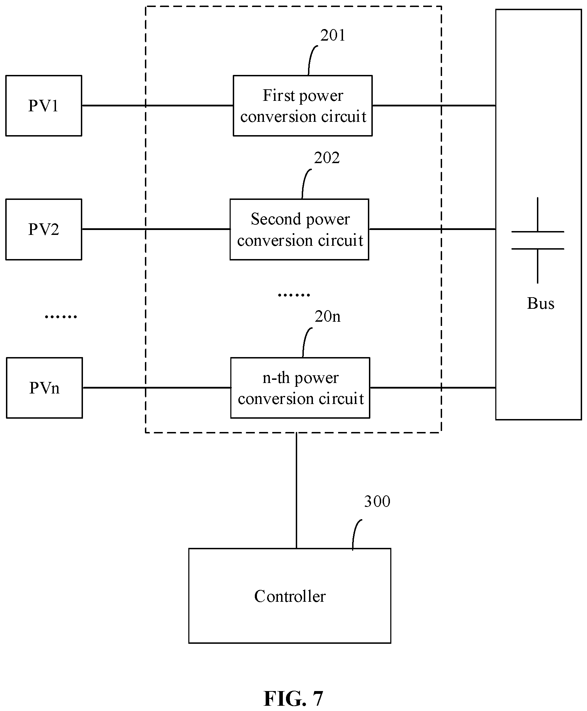

FIG. 6 only shows the example including three power conversion circuits. It should be understood that the number of the power conversion circuits included in the power converter is not limited in the embodiments of the present disclosure, and the number of the power conversion circuits may be any integer greater than or equal to 2. Reference is made to FIG. 7, which is a schematic diagram of a power converter according to another embodiment of the present disclosure.

The power converter according to the embodiment of the present disclosure includes n power conversion circuits, including a first power conversion circuit 201, a second power conversion circuit 202, and up to an n-th power conversion circuit 20n. A first terminal of the first power conversion circuit 201 is connected to a corresponding photovoltaic module PV1, the second power conversion circuit 202 corresponds to a photovoltaic module PV2, until the n-th power conversion circuit 20n corresponds to a photovoltaic module PVn. The controller may control the n power conversion circuits in the ways described above, so that the n power conversion circuits operate at the global maximum power point.

For the power converter according to the embodiments of the present disclosure, if the difference between the input powers of multiple power conversion circuits exceeds the predetermined range, it indicates that a photovoltaic module is shaded, and a local maximum power point appears. Therefore, it is required to perform the IV curve scanning on the low-power conversion circuit having a difference exceeding the predetermined range to determine a new maximum power point and control the power conversion circuit to operate at the new maximum power point to avoid continuously operating at the local maximum power point and reducing power generation.

In the above embodiments, the passive scanning is described. Hereinafter, an active scanning is described. The controller is further configured to: perform the IV curve scanning on one of the first power conversion circuit and the second power conversion circuit if the difference between the electrical parameter of the first power conversion circuit and the electrical parameter of the second power conversion circuit is within the predetermined range in a predetermined time period; perform the IV curve scanning on the other one of the first power conversion circuit and the second power conversion circuit if a difference between the electrical parameter corresponding to the maximum power point before the IV curve scanning and the electrical parameter corresponding to the maximum power point after the IV curve scanning is greater than the predetermined threshold; and control each of the first power conversion circuit and the second power conversion circuit to operate at their respective maximum power point after the IV curve scanning.

In the embodiments of the present disclosure, the length of the predetermined time period is not limited. For example, the predetermined time period may be measured in minutes, hours, or days. In a case of no difference in electrical parameters exceeding the predetermined range within the predetermined time period, an active IV curve scanning may be performed, and an IV curve scanning may be performed on any one of the multiple power conversion circuits. If a difference between the electrical parameter of the power conversion circuit at the maximum power point before the IV curve scanning and the electrical parameter of the power conversion circuit at the maximum power point after the IV curve scanning is large, the IV curve scanning is performed on all the other power conversion circuits.

For the power converter according to the embodiments of the present disclosure, a global scanning may be performed on any power conversion circuit in the multiple power conversion circuits, and the global scanning may be performed at a fixed time period. For example, in solving the typical problem of mutual shading between the front and rear rows of components (factors such as distance, latitude, and solar radiation angle are designed based on the space distances between components in the power station), the global scanning may be performed at a morning time period or an evening time period (such as before 9am and after 3pm). Alternatively, an IV curve scanning may be performed on any one of the power conversion circuits in real time for without time limit.

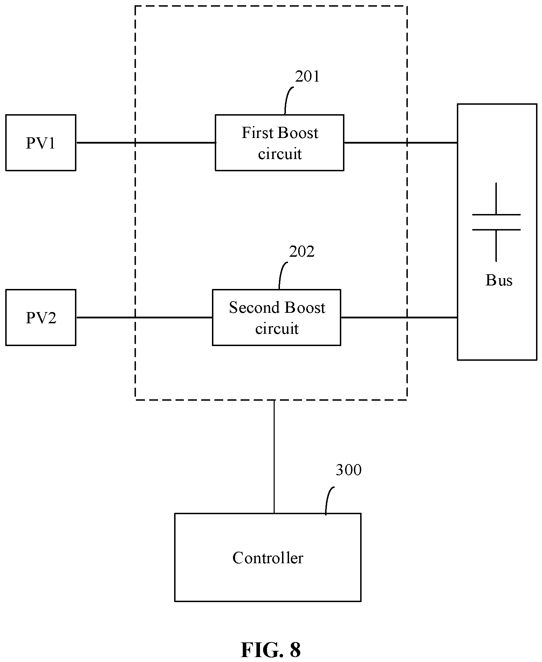

For the power converter according to an embodiment of the present disclosure, each of the first power conversion circuit and the second power conversion circuit includes a direct-current/direct-current conversion circuit. For example, the direct-current/direct-current conversion circuit includes a boost circuit. Reference is made to FIG. 8, which is a schematic diagram of a power converter according to another embodiment of the present disclosure.

In FIG. 8, descriptions are provided by taking a power converter including two power conversion circuits as an example. A first power conversion circuit includes a first Boost circuit 201, and a second power conversion circuit includes a second Boost circuit 202. The first Boost circuit 201 is configured to determine a maximum power point of PV1 during operation, and then operates at the maximum power point, thereby generating maximum power. Similarly, the second Boost circuit 202 is configured to determine a maximum power point of PV2 during operation, and then operates at the maximum power point, thereby generating maximum power.

With the power converter according to the embodiments of the present disclosure, the IV curve scanning can be performed actively or passively to determine a global maximum power point for the photovoltaic module being shaded, solving the problem of power generation loss caused by multiple peak values of power points due to the mutual shading between front and rear rows of photovoltaic modules caused by layouts, solar irradiation angles, land use designs and the like in photovoltaic power plants. Moreover, with the solutions in the embodiments of the present disclosure, local peak values of input powers of multiple power conversion circuits can be quickly determined, and the IV curve scanning can be performed on some of the power conversion circuits, thereby improving efficiency.

In the embodiments of the present disclosure, a physical form of a power converter product is not limited. For example, the power converter may be arranged in an inverter which may be a string inverter, and the power converter may be arranged in a combiner box or an optimizer.

Based on the power converter according to the above embodiments, a photovoltaic system is further provided according to an embodiment of the present disclosure, which is described in detail below with reference to the accompanying drawings.

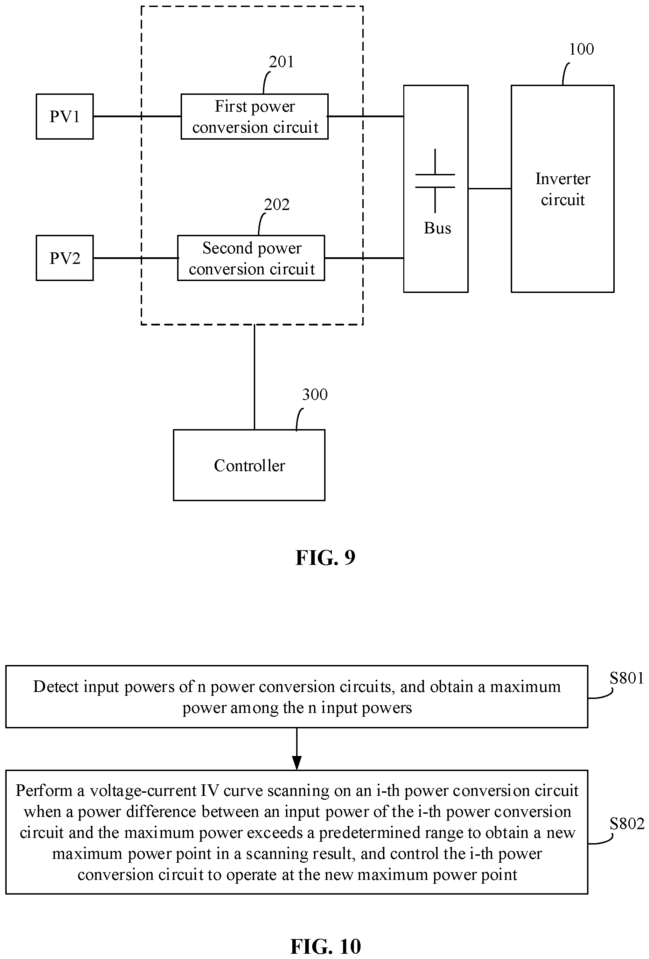

Reference is made to FIG. 9, which is a schematic diagram of a photovoltaic system according to another embodiment of the present disclosure.

The photovoltaic system according to the embodiment of the present disclosure includes the power converter described in the above embodiments, and further includes an inverter circuit 100.

A first terminal of the first power conversion circuit 201 is connected to a corresponding photovoltaic module PV1, and a first terminal of the second power conversion circuit 202 is connected to a corresponding photovoltaic module PV2.

A second terminal of the first power conversion circuit 201 and a second terminal of the second power conversion circuit 202 are both connected to a direct-current side of the inverter circuit.

With the photovoltaic system according to the embodiments of the present disclosure, the IV curve scanning can be performed actively or passively to determine a global maximum power point for the photovoltaic module being shaded, solving the problem of power generation loss caused by multiple peak values of power points due to the mutual shading between front and rear rows of photovoltaic modules caused by layouts, solar irradiation angles, land use designs and the like in photovoltaic power plants. Moreover, with the solutions in the embodiments of the present disclosure, local peak values of input powers of multiple power conversion circuits can be quickly determined, and the IV curve scanning can be performed on some of the power conversion circuits, thereby improving efficiency.

Based on the photovoltaic system according to the above embodiments, a control method for a power converter is further provided according to an embodiment of the present disclosure, which is described in detail below with reference to the accompanying drawings.

Reference is made to FIG. 10, which is a flowchart of a control method for a power converter according to an embodiment of the present disclosure.

The control method for a power converter according to the embodiment of the present disclosure includes the following steps S801 and S802.

In step S801, input powers of n power conversion circuits are detected, and a maximum power among the n input powers is obtained, where n is an integer greater than or equal to 2.

The input terminal of the inverter is connected to multiple power conversion circuits, and it is required to obtain the input powers of all the power conversion circuits and determine a maximum input power from the n input powers as the maximum power.

In step S802, a current-voltage IV curve scanning is performed on an i-th power conversion circuit, if a power difference between an input power of the i-th power conversion circuit and the maximum power exceeds a predetermined range, to obtain a new maximum power point in a scanning result, and the i-th power conversion circuit is controlled to operate at the new maximum power point. The i-th power conversion circuit is any one of the n power conversion circuits.

Except for the power conversion circuit having the maximum power, the input powers of the other n-1 power conversion circuits are compared with the maximum power to determine a power conversion circuit with a power difference between the input power and the maximum power exceeds the predetermined range. It should be understood that one power conversion circuit may be determined, or multiple power conversion circuits may be determined. For each of the power conversion circuits with a power difference between the input power and the maximum power exceeding the predetermined range, an IV curve scanning is performed on the power conversion circuit to obtain a new maximum power point for the power conversion circuit.

With the control method for the power converter according to the embodiments of the present disclosure, to avoid loss of power generation when the photovoltaic module is shaded, a global IV scanning is performed if the power of the photovoltaic module is low, so that the photovoltaic module operates at a maximum power point after the global IV scanning, avoiding the photovoltaic module from operating at a local maximum power point for a long time period.

In the control method according to the above embodiments, an IV curve scanning is passively performed on the photovoltaic module. Hereinafter, actively performing an IV curve scanning is described. In an embodiment, the control method for the power converter according to an embodiment of the present disclosure further includes: performing, if differences between the electrical parameters of the n power conversion circuits and the most value are within the predetermined range in a predetermined time period, the IV curve scanning on any one of the n power conversion circuits; performing, if a difference between the electrical parameter corresponding to the maximum power point before the IV curve scanning and the electrical parameter corresponding to the maximum power point after the IV curve scanning is greater than the predetermined threshold, the IV curve scanning on the other power conversion circuits; and controlling each of the power conversion circuits to operate at their respective maximum power point after the IV curve scanning.

For example, descriptions are provided still by taking the electrical parameter as an input power as an example.

In a predetermined time period, if differences between the input powers of the n power conversion circuits and the maximum power are within the predetermined range, the IV curve scanning is performed on any one of the n power conversion circuits; if a difference between the input power corresponding to the maximum power point before the IV curve scanning and the input power corresponding to the maximum power point after the IV curve scanning is greater than the predetermined threshold, the IV curve scanning is performed on the other power conversion circuits; and each of the power conversion circuits is controlled to operate at their respective maximum power point after the IV curve scanning.

Below, an implementation of obtaining a power difference is described. It is determined whether the power difference between the input power of the i-th power conversion circuit and the maximum power exceeds the predetermined range by: directly comparing a power difference between the input power of the i-th power conversion circuit and an input power of a power conversion circuit having the maximum power with the predetermined range in a case that the number of photovoltaic modules connected to the i-th power conversion circuit is the same as the number of photovoltaic modules connected to the power conversion circuit having the maximum power; and obtaining a difference between the input power of the i-th power conversion circuit and an input power of a power conversion circuit having the maximum power, and comparing a product of the difference and a predetermined ratio with the predetermined range, in a case that the number of photovoltaic modules connected to the i-th power conversion circuit is different from the number of photovoltaic modules connected to the power conversion circuit having the maximum power. The predetermined ratio is obtained based on the number of the photovoltaic modules connected to the i-th power conversion circuit and the number of the photovoltaic modules connected to the power conversion circuit having the maximum power.

In an embodiment, it is determined whether the power difference between the input power of the i-th power conversion circuit and the maximum power exceeds the predetermined range by: obtaining a first electrical parameter that is equal to a product of the input power of the i-th power conversion circuit and a predetermined ratio, obtaining a difference between the first electrical parameter (that is, the product of the input power of the i-th power conversion circuit and the predetermined ratio) and the input power of the power conversion circuit having the maximum power, and comparing the difference with the predetermined range, in a case that the number of photovoltaic modules connected to the i-th power conversion circuit is different from the number of photovoltaic modules connected to the power conversion circuit having the maximum power. The predetermined ratio is obtained based on the number of the photovoltaic modules connected to the i-th power conversion circuit and the number of the photovoltaic modules connected to the power conversion circuit having the maximum power.

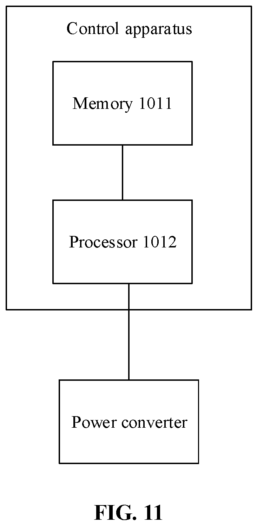

Reference is made to FIG. 11, which is a schematic diagram of a control apparatus according to an embodiment of the present disclosure.

The control apparatus may include a memory 1011 and a processor 1012. The processor 1012 may be connected to the power converter, and may drive switches in the power conversion circuits in the power converter. As shown in FIG. 11, the memory may be a random access memory (RAM), a flash memory, a read only memory (ROM), an EPROM memory, a non-volatile read-only electronic programmable memory (EPROM), a register, a hard disk, a removable disk, and the like.

The memory 1011 may store computer instructions. The computer instructions stored in the memory 1011, when being executed by the processor 1012, cause the processor 1012 to perform the control method for the power converter. The memory 1011 may further store data, for example, information such as the predetermined range and the predetermined threshold mentioned in the above embodiments.

All or part of the above embodiments may be implemented by software, hardware, firmware or any combination thereof. When implemented by using software, all or some of the functions may be implemented in a form of a computer program product. The computer program product includes one or more computer instructions. When the computer program instructions are loaded and executed on a computer, all or part of the processes or functions described in the embodiments of the present disclosure are generated. The computer may be a general-purpose computer, a special-purpose computer, a computer network, or other programmable apparatuses. The computer instructions may be stored in a computer readable storage medium or transmitted from one computer readable storage medium to another computer readable storage medium. For example, the computer instructions may be transmitted from one website, computer, server or data center to another website, computer, server or data center in a wired (for example, a coaxial cable, an optical fiber or a digital subscriber line (DSL)) or wireless (for example, infrared, wireless or microwave) manner. The computer readable storage medium may be any available medium capable of being accessed by a computer or include a data storage device integrated by one or more available media, such as a server and a data center. The available medium may be a magnetic medium (for example, a floppy disk, a hard disk, or a magnetic tape), a semiconductor medium (for example, a solid state disk (SSD)), or the like.

A readable storage medium is further provided according to an embodiment of the present disclosure for storing the method according to the above embodiments. For example, the readable storage medium may be a random access memory (RAM), a flash memory, a read only memory (ROM), an EPROM memory, a non-volatile read-only electronic programmable memory (EPROM), a register, a hard disk, a removable disk, or any other form of storage medium in the art.

It should be noted that the embodiments in the present disclosure are described in a progressive manner, and each of the embodiments focuses on its differences from the other embodiments. The same and similar parts among the embodiments may be referred to each other. Since the product disclosed in the embodiments corresponds to the method disclosed in the embodiments, the description of the method is relatively simple, and references may be made to the description of the product for relevant matters.

The disclosed embodiments are described above so that those skilled in the art can make or use the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

## Claims

1. A power converter, comprising:
a controller; and
at least two power conversion circuits, wherein
the at least two power conversion circuits comprises a first power conversion circuit and a second power conversion circuit;
a first terminal of the first power conversion circuit is connected to a first photovoltaic module, and a first terminal of the second power conversion circuit is connected to a second photovoltaic module; and
the controller is configured to, if a difference between an electrical parameter of the first power conversion circuit and an electrical parameter of the second power conversion circuit exceeds a predetermined range, perform a current-voltage IV curve scanning on the first power conversion circuit or the second power conversion circuit whichever has a lower power, a lower current or a higher voltage to obtain a new maximum power point in a scanning result, and control the power conversion circuit on which the current-voltage IV curve scanning is performed to operate at the new maximum power point, wherein the electrical parameter comprises at least one of a power, a voltage and a current.

2. The power converter according to claim 1, wherein the controller is further configured to:
perform the IV curve scanning on one of the first power conversion circuit and the second power conversion circuit if the difference between the electrical parameter of the first power conversion circuit and the electrical parameter of the second power conversion circuit is within the predetermined range in a predetermined time period;
perform the IV curve scanning on the other one of the first power conversion circuit and the second power conversion circuit if a difference between the electrical parameter corresponding to the maximum power point before the IV curve scanning and the electrical parameter corresponding to the maximum power point after the IV curve scanning is greater than the predetermined threshold; and
control each of the first power conversion circuit and the second power conversion circuit to operate at their respective maximum power point after the IV curve scanning.

3. The power converter according to claim 1, further comprising a third power conversion circuit, wherein
the electrical parameter is the power, and
the controller is configured to: obtain a maximum power of the first power conversion circuit, the second power conversion circuit, and the third power conversion circuit; compare powers of two power conversion circuits other than the power conversion circuit having the maximum power with the maximum power; perform, if differences between the powers of the two power conversion circuits and the maximum power exceed the predetermined range, the IV curve scanning on each of the two power conversion circuits to obtain a maximum power point in scanning results; and control each of the two power conversion circuits to operate at their respective maximum power point.

4. The power converter according to claim 3, wherein the controller is configured to perform, if a difference between an electrical parameter of one of the two power conversion circuits and the maximum power exceeds the predetermined range, the IV curve scanning on the power conversion circuit having the difference exceeding the predetermined range to obtain a maximum power point in a scanning result, and control the power conversion circuit to operate at the maximum power point after the IV curve scanning.

5. The power converter according to any one of claims 1 to 4, wherein
in a case that the number of the first photovoltaic module is same as the number of the second photovoltaic module, the difference between the electrical parameter of the first power conversion circuit and the electrical parameter of the second power conversion circuit is directly compared with the predetermined range; and
in a case that the number of the first photovoltaic module is different from the number of the second photovoltaic module, the difference between the electrical parameter of the first power conversion circuit and the electrical parameter of the second power conversion circuit is obtained, and a product of the difference and a predetermined ratio is compared with the predetermined range, wherein the predetermined ratio is obtained based on the number of the first photovoltaic module and the number of the second photovoltaic module.

6. The power converter according to any one of claims 1 to 5, wherein the first power conversion circuit comprises a direct-current/direct-current conversion circuit, and the second power conversion circuit comprises a direct-current/direct-current conversion circuit.

7. The power converter according to claim 6, wherein the power converter is arranged in an inverter, a combiner box, or an optimizer.

8. A photovoltaic system, comprising:
the power converter according to any one of claims 1 to 7; and
an inverter circuit, wherein
a second terminal of the first power conversion circuit and a second terminal of the second power conversion circuit are both connected to a direct-current side of the inverter circuit.

9. A control method for a power converter, comprising:
detecting electrical parameters of n power conversion circuits, and obtaining a most value among the n electrical parameters, wherein n is an integer greater than or equal to 2, the electrical parameters comprises powers, voltages, or currents, the most value is a maximum value in a case that the electrical parameters are powers or currents, and the most value is a minimum value in a case that the electrical parameters are voltages; and
performing, if a difference between an electrical parameter of an i-th power conversion circuit and the most value exceeds a predetermined range, a current-voltage IV curve scanning on the i-th power conversion circuit to obtain a new maximum power point in a scanning result, and controlling the i-th power conversion circuit to operate at the new maximum power point, wherein the i-th power conversion circuit is any one of the n power conversion circuits.

10. The control method according to claim 9, further comprising:
performing, if differences between the electrical parameters of the n power conversion circuits and the most value are within the predetermined range in a predetermined time period, the IV curve scanning on any one of the n power conversion circuits;
performing, if a difference between the electrical parameter corresponding to the maximum power point before the IV curve scanning and the electrical parameter corresponding to the maximum power point after the IV curve scanning is greater than the predetermined threshold, the IV curve scanning on the other power conversion circuits; and
controlling each of the power conversion circuits to operate at their respective maximum power point after the IV curve scanning.

11. The control method according to claim 9, wherein it is determined whether the difference between the electrical parameter of the i-th power conversion circuit and the most value exceeds the predetermined range by:
directly comparing a difference between the electrical parameter of the i-th power conversion circuit and an electrical parameter of a power conversion circuit having the most value with the predetermined range in a case that the number of photovoltaic modules connected to the i-th power conversion circuit is the same as the number of photovoltaic modules connected to the power conversion circuit having the most value; and
obtaining a difference between the electrical parameter of the i-th power conversion circuit and an electrical parameter of a power conversion circuit having the most value, and comparing a product of the difference and a predetermined ratio with the predetermined range, in a case that the number of photovoltaic modules connected to the i-th power conversion circuit is different from the number of photovoltaic modules connected to the power conversion circuit having the most value, wherein the predetermined ratio is obtained based on the number of the photovoltaic modules connected to the i-th power conversion circuit and the number of the photovoltaic modules connected to the power conversion circuit having the most value.

12. The control method according to claim 11, wherein it is determined whether the difference between the electrical parameter of the i-th power conversion circuit and the most value exceeds the predetermined range by:
obtaining a first electrical parameter that is equal to a product of the electrical parameter of the i-th power conversion circuit and a predetermined ratio, obtaining a difference between the first electrical parameter and the electrical parameter of the power conversion circuit having the most value, and comparing the difference with the predetermined range, in a case that the number of photovoltaic modules connected to the i-th power conversion circuit is different from the number of photovoltaic modules connected to the power conversion circuit having the most value, wherein the predetermined ratio is obtained based on the number of the photovoltaic modules connected to the i-th power conversion circuit and the number of the photovoltaic modules connected to the power conversion circuit having the most value.

13. A control apparatus, comprising:
a processor; and
a memory, storing a program, instructions or codes, wherein
the processor is configured, when executing the program, the instructions or the codes stored in the memory, to perform the control method for a power converter according to any one of claims 9 to 12.

14. A computer-readable storage medium, storing a computer program, wherein the computer program, when executed by a processor, causes the processor to perform the control method for a power converter according to any one of claims 9 to 12.
